# EUROPÄISCHE PATENTSCHRIFT

(11) **EP 1 108 736 B1**
(45) Veröffentlichungstag und Bekanntmachung des Hinweises auf die Patenterteilung: **30.03.2005**
(21) Anmeldenummer: 00126411.8
(22) Anmeldetag: 05.12.2000
(51) Int. Cl.: C08G 18/40, C08G 18/42, C08G 18/48, D06N 3/14, B32B 5/18

(54) **Flammkaschierbare Polyurethanschaumstoffe**
Flame-laminatable polyurethane foams
Mousses de polyuréthane scellables à la flamme

(30) Priorität: 17.12.1999 DE 19961417
(43) Veröffentlichungstag der Anmeldung: 20.06.2001
(73) Patentinhaber: Bayer MaterialScience AG, 51368 Leverkusen (DE)
(72) Erfinder: Haas, Peter, Dr., 42781 Haan (DE); Gossner, Matthäus, 51061 Köln (DE); Herzog, Klaus-Peter, 51371 Leverkusen (DE)

(56) Entgegenhaltungen:
- EP-A- 0 428 737
- WO-A-96/37533
- PATENT ABSTRACTS OF JAPAN vol. 016, no. 249 (C-0948), 8. Juni 1992 (1992-06-08) & JP 04 055420 A (DAINIPPON INK & CHEM INC), 24. Februar 1992 (1992-02-24)

## Beschreibung

Die Erfindung betrifft flammkaschierbare Polyurethan-Weichblockschaumstoffe mit hoher Schälfestigkeit, Verfahren zu ihrer Herstellung und deren Verwendung zur Textilkaschierung.

Durch Schneidevorgänge an Polyurethanschaumstoffblöcken hergestellte Schaumstoffbahnen werden oft dazu genutzt, mit den unterschiedlichsten Textilien für verschiedene Anwendungen kaschiert zu werden. Dies wird über ein Klebe- oder Oberflächenschmelzverfahren wie dem Flammkaschieren durchgeführt. Für die gebräuchliche Flammkaschierung werden wegen besonderer Eignung Polyester-Polyurethanschaumstoffe verwendet. Die Estergruppen in der Polyolkomponente bewirken ein gutes Schmelzklebeverhalten mit optimalem Erstarrungsverhalten; die Schaumstoffe zeigen eine außerordentlich hohe Haftung auf Textilien. Solche Polyester-Polyurethanschaumstoff-Textil-Kaschate zeigen Schälfestigkeiten nach DIN 53357 von 18 bis 22 N. Sie zeigen zudem Bruchdehnungen um 300 % und Festigkeiten um 200 kPa und erlauben daher hohe Kaschiergeschwindigkeiten. Weiter sind solche Polyester-Schaumstoffe bei bestimmten Rohdichten selbstverlöschend nach FMVSS 302 (SE). Daher werden für die Kaschierung überwiegend Polyester-Schaumstoffe als Schaumstoff-Folie verwendet. Nachteilig ist jedoch ihr Foggingverhalten nach DIN 75201, da die Polyesterpolyole herstellungsbedingt fogging-aktive niedermolekulare Komponenten enthalten. Weiterhin besitzen sie einen hohen Anteil an geschlossenem Zellgefüge.

Eine Alternative bietet der Einsatz von Schaumstoffen auf Polyetherbasis. Diese weisen jedoch eine nicht befriedigende Kaschierfähigkeit auf. Zur Steigerung der Kaschierfähigkeit von Polyether-Schaumstoffen sind verschiedene Vorschläge gemacht worden:

So wird in EP-A 25 549 der Zusatz von Hydroxypivalinsäureneopentylglykolester bei der Schaumstoffherstellung vorgeschlagen. Dadurch werden eine gute Kaschierfähigkeit und eine gute Hochfrequenzverschweißbarkeit erreicht, jedoch werden auch bei höheren Rohdichten für Etherschaumstoffe hohe Werte für den Druckverformungsrest erhalten.

EP-A 35 687 offenbart die Verwendung von Lösungen von Umsetzungsprodukten von Diisocyanaten mit diprimären Diolen in höhermolekularen Polyethern mit überwiegend sekundären Hydroxylgruppen zur Herstellung flammkaschierbarer Schaumstoffe. Die so erhaltenen Schaumstoffe sind jedoch nicht alterungsbeständig. So findet man beispielsweise eine schlechtere Rückstellfähigkeit nach Dauerbeanspruchung. Bei niedrigeren Rohdichten und dem Zusatz von Flammschutzmitteln zum Erreichen selbstverlöschender Eigenschaften sind diese Nachteile noch ausgeprägter.

US-PS 5 891 928 und 5 900 087 beschreiben den Zusatz von aliphatischen Diolen oder Polymerdiolen zu Polyether-Schaumstoffformulierungen zur Verbesserung der Flammkaschierbarkeit. Die erreichten Schälfestigkeiten der kaschierten Teile sind mit 8 bis 14 N jedoch deutlich geringer als die kaschierter Polyester-Schaumstoffe, die Werte von 18 bis 22 N erreichen. Für eine gute Haftung sind erfahrungsgemäß ca. 16 N Schälfestigkeit erforderlich.

Es wurde nun gefunden, dass durch Verwendung aromatisch modifizierter Glykole bzw. Etherglykole die Herstellung flammkaschierfähiger Etherschaumstoffe gelingt, deren Schälfestigkeit, Zugfestigkeit und Bruchdehnung denen von Polyester-Schaumstoffen vergleichbar sind und die zudem das günstige Alterungs- und Foggingverhalten von Polyether-Schaumstoffen zeigen, auch bei Schaumstoffen, die selbstverlöschend gemäß FMVSS 302 eingestellt sind.

Gegenstand der Erfindung sind flammkaschierbare Polyether-Polyurethanschaumstoffe, erhältlich durch Umsetzung von
A) Polyisocyanaten bzw. Polyisocyanatprepolymeren mit
B) mindestens einem Polyetherpolyol der Funktionalität 2 bis 6 und einem zahlenmittleren Molekulargewicht von 1.000 bis 10.000 g/mol,
C) gegebenenfalls aliphatischen Kettenverlängerern mit einem Molekulargewicht von 62 bis 800,
D) mindestens bifunktionellen aromatischen Polyolen als Flammkaschierzusatzstoffen,
E) Wasser, gegebenenfalls CO₂, insbesondere in flüssiger Form, und/oder organischen Treibmitteln,
F) gegebenenfalls Stabilisatoren,
G) gegebenenfalls Aktivatoren,
H) gegebenenfalls Flammschutzmitteln sowie anderen Zusatzstoffen.

Als Komponente A) werden im erfindungsgemäßen Verfahren organische Di- oder Polyisocyanate oder Polyisocyanatprepolymere verwendet. Als Di- oder Polyisocyanate kommen aliphatische, cycloaliphatische, araliphatische, aromatische und heterocyclische Polyisocyanate in Frage, wie sie in Justus Liebigs Annalen der Chemie 562 (1949) 75 beschrieben werden, beispielsweise solche der Formel

Q(NCO)ₙ

in der
- n: eine ganze Zahl von 2 bis 4, vorzugsweise 2, und
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen bedeuten.

Bevorzugt sind Polyisocyanate, wie sie in der DE-OS 28 32 253 beschrieben werden. Besonders bevorzugt eingesetzt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Hamstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'und/oder 2,4'-Diphenylmethandiisocyanat ableiten. Verwendet werden können auch Prepolymere aus den genannten Isocyanaten und organischen Verbindungen mit mindestens einer Hydroxylgruppe. Beispielhaft genannt seien ein bis vier Hydroxylgruppen aufweisende Polyol- oder Polyester mit (zahlenmittleren) Molekulargewichten von 60 bis 1400. Ganz besonders bevorzugt finden die unter dem Namen "polymeres Diphenylmethandiisocyanat" technisch erhältlichen Polyisocyanate mit einer höheren Funktionalität als 2,0 sowie aus ihnen hergestellte Prepolymere Verwendung.

Erfindungsgemäß enthält die Polyolkomponente B) mindestens ein Polyetherpolyol (Poly(oxyalkylen)polyol) der Funktionalität 2 bis 6 und einem zahlenmittleren Molekulargewicht von 1.000 bis 10.000 g/mol. Es können jedoch auch Gemische solcher Polyole eingesetzt werden.

Die erfindungsgemäß eingesetzten Poly(oxyalkylen)polyole können z. B. durch Polyaddition von Alkylenoxiden an polyfunktionelle Starterverbindungen in Gegenwart von basischen Katalysatoren hergestellt werden. Bevorzugte Starterverbindungen sind Moleküle mit zwei bis sechs Hydroxylgruppen pro Molekül wie Wasser, Triethanolamin, 1,2-Ethandiol, 1,2-Propandiol, 1,3-Propandiol, Diethylenglykol, Dipropylenglykol, Triethylenglykol, Tripropylenglykol, 1,2-Butandiol, 1,3-Butandiol, 1,4-Butandiol, 1,2-Hexandiol, 1,3-Hexandiol, 1,4-Hexandiol, 1,5-Hexandiol, 1,6-Hexandiol, Glycerol, Trimethylolpropan, Pentaerythrit, Mannit oder Sorbit.

Weitere mögliche Starterverbindungen sind Ammoniak oder Verbindungen, die mindestens eine primäre oder sekundäre Aminogruppe aufweisen, wie beispielsweise aliphatische Amine wie 1,2-Diaminoethan, Oligomere des 1,2-Diaminoethans (beispielsweise Diethylentriamin, Triethylentetramin oder Pentaethylenhexamin), Ethanolamin oder Diethanolamin. 1,3-Diaminopropan, 1,3-Diaminobutan, 1,4-Diaminobutan, 1,2-Diaminohexan, 1,3-Diaminohexan, 1,4-Diaminohexan, 1,5-Diaminohexan, 1,6-Diaminohexan, aromatische Amine wie 1,2-Diaminobenzol, 1,3-Diaminobenzol, 1,4-Diaminobenzol, 2,3-Diaminotoluol, 2,4-Diaminotoluol, 3,4-Diaminotoluol, 2,5-Diaminotoluol, 2,6-Diaminotoluol, 2,2'-Diaminodiphenylmethan, 2,4'-Diaminodiphenylmethan, 4,4'-Diaminodiphenylmethan oder aromatische Amine, die durch säurekatalysierte Kondensierung von Anilin mit Formaldehyd erhalten werden. Die Starterverbindungen können allein oder im Gemisch verwendet werden.

Bevorzugt zur Herstellung der erfindungsgemäß eingesetzten Poly(oxyalkylen)polyole verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen. Näheres ist "Ullmanns Encyclopädie der industriellen Chemie", Band A21, 1992, S. 670 f. zu entnehmen.

Das erfindungsgemäß eingesetzte Poly(oxalkylen)polyol kann auch eine Dispersion eines gepfropften Polymerisationsprodukts in einem erfindungsgemäßen Poly(oxalkylen)polyol sein. Dieses Polymerisationsprodukt kann z.B. durch radikalische insitu-Polymerisation von Acrylnitril und/oder Styrol in einem Poly(oxyalkylen)polyol hergestellt werden, z.B. nach der Methode der US-PS 3 523 093. Andere Polymerisationsprodukte sind z.B. Polyharnstoffverbindungen, Polyhydrazide oder tertiäre Aminogruppen enthaltende Polyurethane. Geeignete Methoden zur Herstellung von Dispersionen dieser Polymerisationsprodukte sind beispielsweise beschrieben in EP-A 11 752, US-PS 4 374 209 und DE-OS 32 31 497. Vorzugsweise beträgt der Anteil der Polymerisationsprodukte in der Dispersion 1 bis 50 Gew-%.

Weitere Beispiele geeigneter Polyole, die in der Polyolkomponente B) enthalten sein können, sind polyfunktionelle Alkohole oder Amine oder Aminoalkohole oder Mischungen aus diesen sowie deren oxypropylierte und/oder oxyethylierte Folgeprodukte.

Als Komponente C) werden gegebenenfalls aliphatische Kettenverlängerer mit einem Molekulargewicht von 62 bis 800 g/mol eingesetzt, wie z.B. Glycerin, Glycole, Sorbit sowie Alkanolamine.

Als Flammkaschierzusatzstoffe D) werden erfindungsgemäß mindestens bifunktionelle niedermolekulare aromatische Polyole verwendet. Es können dabei sowohl aromatische Polyesterpolyole wie aromatische Polyetherpolyole eingesetzt werden. Diese Polyole verfügen bevorzugt neben einem relativ kurzkettigen aliphatischen Etheranteil über aromatengebundene Ester- oder Ethergruppierungen. Werden aromatische Polyetherpolyole eingesetzt, so weisen diese bevorzugt ein zahlenmittleres Molekulargewicht von 150 bis 999 g/mol, besonders bevorzugt 150 bis 700 g/mol auf. Geeignete Polyesterpolyole haben bevorzugt zahlenmittlere Molekulargewichte von 150 bis 1.200 g/mol, besonders bevorzugt 150 bis 1000 g/mol.

Beispiele sind aromatische Polyesterpolyole aus mindestens bifunktionellen aromatischen Dicarbonsäuren wie Phthalsäure, Terephthalsäure, Isophthalsäure oder auch höherfunktionellen Carbonsäuren wie Trimellitsäure, Trimesinsäure, deren Carboxylgruppen verestert sind mit Glykolen wie Ethylenglykol, Propylenglykol, Diethylenglykol, Dipropylenglykol, Tripropylenglykol, Triethylenglykol, höheren Homologen dieser Glykole, Butylenglykol, oder höherfunktionellen Alkoholen wie Glycerin oder Trimethylolpropan. Weiterhin können aromatische Polyesterpolyole mit mindestens zwei OH-Gruppen und einer Estergruppe und einer verlängerten phenolischen OH-Gruppe verwendet werden, z.B. 4-(2-Hydroxyethoxy)-benzoesäure-2-hydroxyethylester oder 4-(2-Hydroxyethoxy)-benzoesäure-2-hydroxyethoxyethylester.

Geeignete aromatische Etherpolyole werden hergestellt durch Alkoxylierung mindestens bifunktioneller aromatischer Phenolderivate wie 2,2-Bis-(4-hydroxyphenyl)-propan, Hydrochinon, Dihydroxynaphthalin, Brenzcatechin, Resorcin, Dihydroxybiphenyl, Bis-(hydroxyphenyl)-methan, Dihydroxydiphenylether, Hydroxymethylbenzylalkohol, mit Ethylenoxid, Propylenoxid oder Butylenoxid nach dem Fachmann im Prinzip bekannten Verfahren.

Die Flammkaschierzusatzstoffe D) werden in Mengen von 1 bis 20 Gew. %, bezogen auf die Summe der Polyolkomponenten B)+C) verwendet.

Im erfindungsgemäßen Verfahren wird bevorzugt als Komponente E) Wasser als chemisches Treibmittel eingesetzt, das durch Reaktion mit Isocyanatgruppen Kohlendioxid als Treibgas liefert. Bevorzugt wird Wasser in einer Menge von 1,0 bis 6,0 Gew.-%, bevorzugt 1,5 bis 5,5 Gew.-%, bezogen auf die Summe der Mengen an Komponenten B)+C)+D), eingesetzt. In Komponente E) können auch nicht brennbare physikalische Treibmittel wie Kohlendioxid, insbesondere in flüssiger Form, verwendet werden. Prinzipiell können auch Treibmittel aus der Klasse der Kohlenwasserstoffe wie C₃-C₆-Alkane, z.B. Butane, n-Pentan, iso-Pentan, cyclo-Pentan, Hexane o.ä. oder halogenierte Kohlenwasswerstoffe wie Dichlormethan, Dichlormonofluormethan, Chlordifluorethane, 1,1-Dichlor-2,2,2-Trifluorethan, 2,2-Dichlor-2-fluorethan, insbesondere chlorfreie Fluorkohlenwasserstoffe wie Difluormethan, Trifluormethan, Difluorethan, 1,1,1,2-Tetrafluorethan, Tetrafluorethan (R 134 oder R 134a), 1,1,1,3,3-Pentafluorpropan (R 245fa), 1,1,1,3,3,3-Hexafluorpropan (R 356), 1,1,1,3,3-Pentafluorbutan (R 365mfc), Heptafluorpropan oder auch Schwefelhexafluorid verwendet werden. Auch Gemische dieser Treibmittel sind verwendbar. Weitere geeignete Treibmittel sind Carbonsäuren wie Ameisensäure, Essigsäure, Oxalsäure und chemische Treibmittel, die im Verlauf des Schäumprozesses Gase freisetzen wie z. B. Azoverbindungen. Bevorzugt werden diese Treibmittel in Kombination mit Wasser eingesetzt.

Als Stabilisatoren F) kommen vor allem Polyethersiloxane, bevorzugt wasserlösliche Vertreter, in Frage. Diese Verbindungen sind im allgemeinen so aufgebaut, dass ein langkettiges Copolymerisat aus Ethylenoxid und Propylenoxid mit einem Polydimethylsiloxanrest verbunden ist. Weitere Schaumstabilisatoren sind z.B. in US-PS 2 834 748, 2 917 480, 3 629 308 sowie US-PS 2 917 480 beschrieben.

Beispiele für Aktivatoren G) sind tertiäre Amine, wie Triethylamin, Tributylamin, N-Methyl-morpholin, N-Ethyl-morpholin, N,N,N',N'-Tetramethyl-ethylendiamin, Pentamethyldiethylentriamin und höhere Homologe (s. DE-A 26 24 527 und DE-A 26 24 528), 1,4-Diazabicyclo[2.2.2]octan, N-Methyl-N'-dimethylaminoethylpiperazin, Bis-(dimethylaminoalkyl)-piperazine, N,N-Dimethylbenzylamin, N,N-Dimethylcyclohexylamin, N,N-Diethylbenzylamin, Bis-(N,N-diethylaininoethyl)-adipat, N,N,N',N'-Tetramethyl-1,3-butandiamin, N,N-Dimethyl-β-phenylethylamin, 1,2-Dimethylimidazol, 2-Methylimidazol, monocyclische und bicyclische Amidine sowie Bis-(dialkylamino)-alkyl-ether wie 2,2'-Bis-(dimethylaminoethyl)-ether.

Als Aktivatoren G) können auch organische Metallverbindungen, insbesondere organische Zinnverbindungen, verwendet werden. Als organische Zinnverbindungen kommen neben schwefelhaltigen Verbindungen wie Di-n-octyl-zinnmercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Als Flammschutzmittel H) werden beispielsweise Trikresylphosphat, Tris(2-chlorethyl)phosphat, Tris(2-chlorpropyl)phosphat, Tris(2,3-dibrompropyl)phosphat, Tetrakis(2-chlorethyl)ethylendiphosphat, Dimethylmethanphosphonat, Diethanolaminomethylphosphonsäurediethylester, Tris(dipropylenglykol)phosphit, Tris(dipropylenglykol)phosphat, Bis(2-hydroxyethyl)ethylenglycoldiphosphat-bis(2-chlorethylester) sowie halogenhaltige, flammschützend wirkende Polyole verwendet. Weitere Beispiele von gegebenenfalls mitzuverwendenden Komponenten H) sind Schaumstabilisatoren sowie Zellregler, Reaktionsverzögerer, Stabilisatoren, Weichmacher, Farbstoffe und Füllstoffe sowie fungistatisch und bakteriostatisch wirksame Substanzen. Diese werden meist der Polyolkomponente in Mengen von 0 bis 10 Gewichtsteilen, bevorzugt 2 bis 6 Gewichtsteilen zugesetzt. Einzelheiten über Verwendungs- und Wirkungsweise dieser Zusatzmittel sind in G. Oertel (Hrsg.): "Kunststoff-Handbuch", Band VII, Carl Hanser Verlag, 3. Auflage, München 1993, S.110-115 beschrieben.

Die erfindungsgemäßen Schaumstoffe werden üblicherweise hergestellt, indem das Di- oder Polyisocyanat A) als eine Komponente und die übrigen Bestandteile in Mischung als die andere Komponente mittels einer geeigneten, üblicherweise maschinellen Einrichtung intensiv vermischt werden. Die Herstellung der Schaumstoffe kann sowohl kontinuierlich, etwa auf einer Transportbandanlage als auch diskontinuierlich erfolgen. Die Herstellung von Weichschaumstoffen ist dem Fachmann im Prinzip bekannt und beispielsweise in G. Oertel (Hrsg.):"Kunststoff-Handbuch", Band VII, Carl Hanser Verlag, 3. Auflage, München 1993, S.193-220 beschrieben.

Bevorzugt wird die Herstellung der Schaumstoffe so vorgenommen, dass der NCO/OH-Index, d.h. das stöchiometrische Verhältnis zwischen reaktiven Isocyanatgruppen und Hydroxylgruppen, zwischen 0,80 und 1,20 beträgt. Besonders bevorzugt beträgt der NCO/OH-Index 0,90 bis 1,15. Das Raumgewicht der entstehenden Formkörper beträgt bevorzugt 15 kg m⁻³ bis 55 kg m⁻³, besonders bevorzugt 20 kg m⁻³ bis 50 kg m⁻³.

Gegenstand der Erfindung sind auch unter Verwendung der erfindungsgemäßen Schaumstoffe hergestellte Textil-Schaumstoffverbundmaterialien (Kaschate). Diese sind in üblicher Verarbeitung durch Zusammenfügen der Schaumstoffschmelzschicht mit der textilen Deckschicht herstellbar. Hierzu werden die erfindungsgemäßen Polyether-Polyurethanschaumstoffe nach einer Kurzzeitbeflammung mit einem Textil aus Polyamid, Polyester, Baumwolle oder Lederbezügen mit bleibend hoher Schälfestigkeit verbunden. Üblich ist das Aufbringen eines Charmeuse-Abschlussgewebes auf dem Schaumstoff. Eine weitere Herstellmethode für die erfindungsgemäßen Kaschate ist das Verkleben der erfindungsgemäßen Schaumstoffe mit der textilen Deckschicht mit Schmelzklebemitteln über die an sich bekannte Schmelzklebetechnik oder mittels Dispersionsklebstoffen.

### Beispiele

In den Beispielen wurden folgende Rohstoffe verwendet:

### Polyisocyanate A)

1) Gemisch aus 2,4- und 2,6-Toluylendiisocyanat im Verhältnis 80:20 (Desmodur® T 80, Bayer AG)
2) Gemisch aus 2,4- und 2,6-Toluylendiisocyanat im Verhältnis 65:35 (Desmodur® T 65, Bayer AG)

### Polyetherpolyole B)

1) Polyetherpolyol der OH-Zahl 45 mit überwiegend sekundären OH-Gruppen, hergestellt durch Addition von Propylenoxid/Ethylenoxid (90/10 Gew.-%) an Glycerin als Starter.
2) Polyetherpolyol der OH-Zahl 112, hergestellt durch Addition von Propylenoxid an Propylenglycol als Starter.
3) Polyetherpolyol der OH-Zahl 50 mit 85 mol% primären OH-Gruppen, hergestellt durch Addition von Propylenoxid/Ethylenoxid (50/50 Gew.-%) an Propylenglycol als Starter.
4) Polyetherpolyol der OH-Zahl 45 mit überwiegend sekundären OH-Gruppen und mit 10 Gew.-% aufgepfropftem Füllstoff (Styrol/Acrylnitril, 60/40 Gew.-%), hergestellt durch Addition von Propylenoxid/Ethylenoxid (90/10 Gew.-%) an Glycerin als Starter.

### Flammkaschieradditive D)

### Aromatische Polyester D I)

1) Polyesterpolyol, hergestellt durch Veresterung von 424 g (4M) Diethylenglycol und 332 g (2M) Terephthalsäure bei 150-190°C; OH-Zahl: 300, zahlenmittleres Molekulargewicht 374 g/mol.
2) Polyesterpolyol, hergestellt durch Veresterung von 424 g(4M) Diethylenglycol und 296 g (2M) Phthalsäureanhydrid bei 150-190°C; OH-Zahl: 303, zahlenmittleres Molekulargewicht 370 g/mol.
3) Polyesterpolyol, hergestellt durch Veresterung von 816 g (2M) Octaethylenglycol der OH-Zahl 275 und 148 g (1M) Phthalsäureanhydrid bei 150-190°C; OH-Zahl: 123, zahlenmittleres Molekulargewicht 912 g/mol.
4) Polyesterpolyol, hergestellt durch Veresterung von 600 g (4M) Triethylenglycol der OH-Zahl 750 und 296 g (2M) Phthalsäureanhydrid 150-190°C, OH-Zahl: 330, zahlenmittleres Molekulargewicht 340 g/mol.

### Aromatische Polyetherpolyole D II):

1) Polyetherpolyol, hergestellt durch Addition von 290 g (5M) Propylenoxid an 228 g (1M) Bisphenol A; OH-Zahl: 216, zahlenmittleres Molekulargewicht 519 g/mol.
2) Polyetherpolyol, hergestellt durch Addition von 88 g (2M) Ethylenoxid an 228 g (1M) Bisphenol A; OH-Zahl: 355, zahlenmittleres Molekulargewicht 316 g/mol.
3) Polyetherpolyol, hergestellt durch Addition von 176 g (4M) Ethylenoxid an 228 g (1M) Bisphenol A; OH-Zahl: 280, zahlenmittleres Molekulargewicht 400 g/mol.
4) Polyetherpolyol, hergestellt durch Addition von 88 g (2M) Ethylenoxid an 110 g (1M) Hydrochinon; OH-Zahl: 566, zahlenmittleres Molekulargewicht 189 g/mol.
5) Polyetherpolyol, hergestellt durch Addition von 116 g (2M) Propylenoxid an 228 g (1M) Bisphenol A; OH-Zahl: 323, zahlenmittleres Molekulargewicht 347 g/mol.

### Herstellung der Etherschaumstoffe

Die Blockschaumstoffe wurden auf einer UBT-Anlage (Hennecke GmbH, D-53754 St. Augustin) mit Ausstoß 30 kg/min Rohstoffgemisch hergestellt.

### Beispiele 1-9

Soweit nicht anders angegeben, beziehen sich alle Angaben in der nachfolgenden Tabelle auf Gew.-Teile. Der Formulierung wurden jeweils 1,0 Gew.-Teile Silikonstabilisator (Tegostab® B8232, Th. Goldschmidt AG, D-45127 Essen), 0,12 Gew.-Teile 1,4-Diazabicyclo[2.2.2]octan (Dabco® 33LV, Air Products GmbH, D-45527 Hattingen), 0,17 Gew.-Teile Zinnoctoat, 0,1 Gew.-Teile (2.2'-Bis(dimethylaminoethyl)ether, 70 %ig in Dipropylenglykol (Niax® A1, Witco Surfactants GmbH, D-36396 Steinau), 3,0 Gew.-Teile Flammschutzmittel (Hostaflam® 551, Clariant International AG, CH-4132 Muttenz), 3,0 Gew.-Teile Flammschutzmittel (Arngard® V6, Fa. Rhodia, D-63263 Neu-Isenburg) zugesetzt.

Die Offenzelligkeit der erhaltenen Schaumstoffe wurde bestimmt nach der in EP-A 941 263 beschriebenen Methode. Das Brandverhalten wurde gemäß FMVSS 302 bestimmt, die Stauchhärte nach DIN 53 577, die Zugfestigkeit und die Bruchdehnung DIN 53 571, der Druckverformungsrest nach DIN 53 572, die Rohdichte nach DIN 53 420 und der Foggingwert nach DIN 75 201 bestimmt.

| **Beispiel** | **1** | **2** | **3** | **4** | **5** | **6** | **7** * | **8** * | **9** |
|---|---|---|---|---|---|---|---|---|---|
| B1 | 80 | 80 | 80 | 80 | 80 | 40 | 85 | 85 | 80 |
| B2 | 15 | 15 | 15 | - | - | - | 15 | - | - |
| B3 | - | - | - | 15 | 15 | 15 | - | 15 | 15 |
| B4 | - | - | - | - | - | 40 | - | - | - |
| D I) 2 | 5 | - | - | - | - | 5 | - | - | - |
| D I) 3 | - | 5 | - | - | - | - | - | - | - |
| D I) 4 | - | - | 5 | - | - | - | - | - | - |
| D II) 1 | - | - | - | 5 | - | - | - | - | - |
| D II) 2 | - | - | - | - | 5 | - | - | - | - |
| D II) 5 | - | - | - | - | - | - | - | - | 5 |
| Wasser | 3,6 | 3,6 | 3,6 | 3,6 | 3,6 | 3,6 | 3,6 | 3,6 | 3,6 |
| A1 (TDI 80) | 24,5 | 24,5 | 24,5 | 23,7 | 23,7 | 46 | 45,3 | 43,9 | 24,5 |
| A2 (TDI 65) | 24,5 | 24,5 | 24,5 | 23,7 | 23,7 | - | - | - | 24,5 |
| Index | 108 | 108 | 108 | 108 | 108 | 100 | 108 | 108 | 108 |
| Rohdichte [kg/m ³ ] | 27 | 28 | 29 | 28 | 27 | 28 | 28 | 28 | 28 |
| Schälfestigkeit nach Kaschierung [N] | 18,5 | 18 | 18 | 18 | 19 | 19,5 | 11 | 12 | 19 |
| FMVSS 302 | SE | SE | SE | SE | SE | SE | SE | SE | SE |
| Offenzelligkeit [mmWS] | 40 | 50 | 40 | 40 | 50 | 50 | 40 | 40 | 50 |
| Stauchhärte (40%) [kPa] | 3,1 | 3,0 | 3,1 | 3,0 | 3,2 | 3,5 | 3,2 | 3,2 | 3,2 |
| Zugfestigkeit [kPa] | 160 | 150 | 140 | 140 | 140 | 150 | 160 | 150 | 160 |
| Bruchdehnung [%] | 370 | 380 | 370 | 360 | 370 | 370 | 310 | 320 | 370 |
| Fogging [mg] | 0,2 | 0,3 | 0,3 | 0,2 | 0,3 | 0,3 | 0,2 | 0,2 | 0,2 |
| Druckverformungsrest (90 %) [%] | 7 | 8 | 7 | 6 | 8 | 7 | 6 | 7 | 7 |

| | | | | | | | | | |
|---|---|---|---|---|---|---|---|---|---|
| * nicht erfindungsgemäßes Vergleichsbeispiel | | | | | | | | | |

Die erhaltenen Schaumstoffe wurden zu Bahnen der Breite 50 cm mit einer Höhe von 7 mm zugeschnitten und auf einer Laborflammkaschieranlage (Fa. Schmittmaschinen, D-63811 Stockstadt), bei einem Flammenabstand von 18 mm in der Einstellung "blaue Flamme" mit einem Vorschub von 40 m/min durch ein Textil kaschiert. Verarbeitetes Textil: PKW-Sitzqualität, Typ Bändchen Blau, Flächengewicht ca. 500 g/m² (Thierry Michel GmbH, D-96190 Untermerzbach).

Die Schälfestigkeit der erhaltenen Kaschate wurde bestimmt nach DIN 53 357. Die erfindungsgemäßen Beispiele 1-6 und 9 zeigen Schälfestigkeiten von mehr als 18 N und sind somit Polyesterschaumstoff-Kaschaten ebenbürtig. Der Schaumstoff-Textil-Verbund reißt beim Trennen des Verbunds immer im Schaumstoff und belegt damit ein gutes Adhäsionsniveau. Die hohe Bruchdehnung sowie die Zugfestigkeit erlauben hohe Kaschiergeschwindigkeiten, so wie sie bei Esterschaumstoffen üblich sind.

Die Druckverformungsreste sind auch im Bereich geringer Rohdichten und sogar unter Verwendung von die Selbstverlöschung fördernden, an sich weichmachenden Zusatzstoffen (Flammschutzmittel) niedrig.

## Patentansprüche

1. Polyether-Polyurethanschaumstoffe, erhältlich durch Umsetzung von
A) Polyisocyanaten bzw. Polyisocyanatprepolymeren mit
B) mindestens einem Polyetherpolyol der Funktionalität 2 bis 6 und einem zahlenmittleren Molekulargewicht von 1000 bis 10.000 g/mol,
C) gegebenenfalls aliphatischen Kettenverlängerern mit einem Molekulargewicht von 62 bis 800,
D) mindestens bifunktionellen aromatischen Polyolen in Mengen von 1 bis 20 Gew.-%, bezogen auf die Summe der Komponenten B) und C), als Flammkaschierzusatzstoffen,
E) Wasser, gegebenenfalls CO₂, insbesondere in flüssiger Form, und/oder organischen Treibmitteln,
F) gegebenenfalls Stabilisatoren,
G) gegebenenfalls Aktivatoren,
H) gegebenenfalls Flammschutzmitteln sowie anderen Zusatzstoffen.

2. Polyether-Polyurethanschaumstoffe gemäß Anspruch 1, bei denen die Komponente D) Hydroxylgruppen enthaltende Ester der Phthalsäure, Terephthalsäure oder Isophthalsäure mit Glykolen oder Ethergruppen enthaltenden Glykolen enthält.

3. Polyether-Polyurethanschaumstoffe gemäß Anspruch 1, bei denen die Komponente D) Hydroxylgruppen enthaltende Ether mit einem zahlenmittleren Molekulargewicht von 150 bis 999 g/mol enthält

4. Polyether-Polyurethanschaumstoffe gemäß Anspruch 3, bei denen die Komponente D) Hydroxylgruppen enthaltende Ether von Bisphenol A, Hydrochinon, Resorcin, oder Brenzcatechin enthält.

5. Textil-Schaumstoffverbund, enthaltend Polyether-Polyurethanschaumstoffe gemäß einem der Ansprüche 1 bis 4.

6. Verfahren zur Herstellung eines Verbundmaterials, bei dem ein Polyether-Polyurethanschaumstoff gemäß einem der Ansprüche 1 bis 4 mit einem Textil oder einer Deckschicht über ein Oberflächenschmelzverfahren kaschiert wird.

## Claims

1. Polyether-polyurethane foams, obtainable by the reaction of
A) polyisocyanates or polyisocyanate prepolymers with
B) at least one polyether polyol having a functionality of 2 to 6 and a number average molecular weight of 1,000 to 10,000 g/mol,
C) optionally aliphatic chain extenders having a molecular weight of 62 to 800,
D) at least bifunctional aromatic polyols in quantities of 1 to 20 wt.%, based on the sum of components B) and C), as flame lamination additives,
E) water, optionally CO₂, in particular in liquid form, and/or organic blowing agents,
F) optionally stabilisers,
G) optionally activators,
H) optionally flameproofing agents and other additives.

2. Polyether-polyurethane foams according to claim 1, wherein component D) contains hydroxyl-containing esters of phthalic acid, terephthalic acid or isophthalic acid with glycols or glycols containing ether groups.

3. Polyether-polyurethane foams according to claim 1, wherein component D) contains hydroxyl-containing ethers having a number average molecular weight of 150 to 999 g/mol.

4. Polyether-polyurethane foams according to claim 3, wherein component D) contains hydroxyl-containing ethers of bisphenol A, hydroquinone, resorcinol or catechol.

5. Textile/foam laminate, containing polyether-polyurethane foams according to any one of claims 1 to 4.

6. Process for the production of a composite material, wherein a polyether-polyurethane foam according to any one of claims 1 to 4 is laminated with a textile or a top layer by a surface melting process.

## Revendications

1. Mousses de polyéther-polyuréthanne pouvant être obtenues par réaction
A) de polyisocyanates ou prépolymères de polyisocyanates avec
B) au moins un polyétherpolyol de fonctionnalité 2 à 6 et un poids moléculaire en moyenne arithmétique de 1.000 à 10.000 g/mole,
C) éventuellement, des agents aliphatiques d'allongement de la chaîne avec un poids moléculaire de 62 à 800,
D) des polyols aromatiques au moins bifonctionnels comme des additifs de scellage à la flamme,
E) de l'eau, éventuellement du CO₂, en particulier sous forme liquide et/ou des agents gonflants organiques;
F) éventuellement, des stabilisateurs;
G) éventuellement, des activateurs;
H) éventuellement des agents ignifuges ainsi que d'autres additifs.

2. Mousses de polyéther-polyuréthanne selon la revendication 1, dans lesquelles le composant D) contient des esters de l'acide phtalique, de l'acide téréphtalique ou de l'acide isophtalique dotés de groupes hydroxyle avec des glycols ou des glycols contenant des groupes éther.

3. Mousses de polyéther-polyuréthanne selon la revendication 1, dans lesquelles le composant D) contient des éthers dotés de groupes hydroxyle avec un poids moléculaire en moyenne arithmétique de 150 à 999 g/mole.

4. Mousses de polyéther-polyuréthane selon la revendication 3, dans lesquelles le composant D) contient des éthers de bisphénol A, de l'hydroquinone, de la résorcine ou de la pyrocatéchine contenant des groupes hydroxyle.

5. Contrecollé textile-mousse contenant des mousses de polyéther-polyuréthanne selon l'une des revendications 1 à 4.

6. Procédé de préparation d'un matériau composite dans lequel une mousse de polyéther-polyuréthane selon l'une des revendications 1 à 4 est contrecollée avec un textile ou une couche de couverture par le biais d'un procédé de fusion en surface.
